# EUROPEAN PATENT APPLICATION

(11) **EP 4 729 024 A1**
(43) Date of publication of application: **22.04.2026**
(21) Application number: 23952831.8
(22) Date of filing: 26.10.2023
(51) Int. Cl.: A61C 17/34

(54) **ROTATING MECHANISM AND ELECTRIC TOOTHBRUSH**

(30) Priority: 18.09.2023 CN 202322542389 U
(71) Applicant: Guangdong Xinbao Electrical Appliances Holdings Co., Ltd., Foshan, Guangdong 528322 (CN)
(72) Inventor: GUO, Jiangang, Foshan, Guangdong 528322 (CN); HUANG, Meng, Foshan, Guangdong 528322 (CN)
(74) Representative: Monteiro Alves, Inês
(86) International application number: PCT/CN2023/126896
(87) International publication number: WO 2025/060183

(57) **Abstract**

A rotating mechanism and an electric toothbrush. The electric toothbrush comprises a motor (16), an eccentric wheel (17) provided on an output shaft of the motor (16), and a drive shaft (18), wherein the drive shaft (18) is provided with a brush head. A rotating drive mechanism comprises: a motor holder (10) for mounting the motor (16); a swing rod (11), a first end of which is rotationally connected to the motor holder (10); and a connecting rod assembly (12), which comprises a first connecting rod (121) and a second connecting rod (122), the first connecting rod (121) being rotationally connected to both a wheel axle of the eccentric wheel (17) and a second end of the swing rod (11), and the second connecting rod (122) being rotationally connected to both the drive shaft (18) and the second end of the swing rod (11). When the eccentric wheel (17) rotates, the swing rod (11) can be driven by means of the first connecting rod (121) to swing relative to the motor holder (10) within a preset angle range, and when the swing rod (11) swings, the drive shaft (18) is driven by means of the second connecting rod (122) to swing synchronously. The rotating mechanism has low assembly precision requirements and involves stable and smooth transmission.

## Description

### TECHNICAL FIELD

This invention generally relates to the technical field of electric toothbrushes, and more particularly, to a rotating mechanism and an electric toothbrush.

### BACKGROUND

Presently, most of the rotating toothbrushes sold on the market adopt an eccentric drive shaft design. The rotating toothbrushes available on the market are driven by gears (for example, a combined vertical-brush electric toothbrush disclosed in Chinese patent CN110151351A) or by runway grooves (for example, an electric toothbrush disclosed in Chinese patent CN201223467Y).

For rotating toothbrushes driven by gears, eccentric positions are usually achieved through gear engagement. However, ordinary production processes fail to meet extremely high requirements on gear clearance, resulting in unstable quality of products. For rotating toothbrushes driven by runway grooves, a runway groove connecting rod is driven by an eccentric wheel, and the runway groove is in surface-to-surface contact with a positioning shaft of the eccentric wheel. Due to the large contact area of the moving components and the forced change of the movement direction, the movement becomes irregular, and the deformation of the runway groove easily occurs.

### SUMMARY

The purpose of the present invention is to provide a rotating mechanism and an electric toothbrush. The rotating mechanism has low assembly precision requirements and achieves stable and smooth transmission.

To achieve the above purpose, the present invention adopts the following technical solution: a rotating mechanism used on an electric toothbrush; the electric toothbrush comprises a motor, a drive shaft, and an eccentric wheel arranged on an output shaft of the motor; the drive shaft is used for connecting a brush head; the rotating mechanism comprises a motor holder, a swing rod and a connecting rod assembly; the motor holder is used for mounting the motor, and a first end of the swing rod is rotatably connected to the motor holder; the connecting rod assembly comprises a first connecting rod and a second connecting rod; the first connecting rod is respectively rotatably connected to a wheel axle of the eccentric wheel and a second end of the swing rod; the second connecting rod is respectively rotatably connected to the drive shaft and a second end of the eccentric wheel; when the eccentric wheel rotates, the swing rod is driven by the first connecting rod to swing relative to the motor holder within a preset angle range, and when the swing rod swings, the drive shaft is driven by the second connecting rod to swing synchronously with the swing rod.

In another preferred embodiment, the rotating mechanism further comprises an intermediate support connected to the motor holder. The drive shaft is provided with a first positioning column and a second positioning column. The first positioning column is rotatably connected to the intermediate support, and the second positioning column is rotatably connected to the second connecting rod.

In another preferred embodiment, the first connecting rod, the swing rod, and the second connecting rod are all located between the intermediate support and the motor holder and are arranged in sequence along the axis direction of the output shaft of the motor.

In another preferred embodiment, two ends of the swing rod are respectively provided with a rotating shaft, and the two ends of the two connecting rods are respectively provided with an axle hole. The two axle holes in the first connecting rod are respectively correspondingly sleeved on the wheel axle of the eccentric wheel and the drive shaft. The two axle holes in the second connecting rod are respectively correspondingly sleeved on the rotating shafts of the swing rod. This facilitates the assembly between the swing rod and the two connecting rods.

In another preferred embodiment, the motor holder is provided with a connecting shaft that is parallel to the axis of the output shaft of the motor. The connecting shaft is arranged away from the output shaft of the motor. An end portion of the connecting shaft is provided with a locating hole. The rotating shaft of the first end of the swing rod extends into the locating hole and is in a clearance fit with the locating hole. This structure facilitates the assembly of the swing rod. In another preferred embodiment, the rotating mechanism further comprises a top support and a sealing sleeve that are respectively sleeved on the drive shaft. The top support is connected to the intermediate support, and the sealing sleeve is fixed on the top support. The sealing sleeve is in an interference fit with the drive shaft. The sealing sleeve is capable of preventing water from flowing into the interior of the electric toothbrush.

In another preferred embodiment, the drive shaft is made of stainless steel and the sealing sleeve is made of silica gel.

In another preferred embodiment, the outer periphery of the drive shaft is provided with a rubber coating for protecting the drive shaft.

In another preferred embodiment, the preset angle range is -20°~20°.

An electric toothbrush, comprising the rotating mechanism in any above embodiments.

Compared with the prior art, the present invention has the following advantages: compared with the gear mechanism and the runway-type connecting rod mechanism, the rotating mechanism of the present invention connects the wheel axle of the eccentric wheel and the drive shaft through two connecting rods and a swing rod; by means of this design, the drive shaft swings more stably and smoothly, the power consumption and noise are reduced, and the functional life of the electric toothbrush is prolonged.

The additional aspects and advantages of the present invention are partially given in the following description. They may partially become apparent from the description or may be learned through the implementation of the present invention.

### BRIEF DESCRIPTION OF THE DRAWINGS

In the drawings that are not necessarily drawn to scale, identical reference numerals may be used to denote similar components in different views. Identical reference numerals with letter suffixes or different letter suffixes may represent different instances of similar components. The drawings illustrate various embodiments by way of example and are not intended to limit the disclosed embodiments. They are used in conjunction with the specification and claims to describe the disclosed embodiments. Where appropriate, identical reference numerals are used throughout the drawings to refer to the same or similar parts. Such embodiments are illustrative and not intended to be exhaustive or exclusive embodiments of the apparatus or method.
Figure 1 is a schematic diagram illustrating an explosive view of the rotating mechanism of the present invention;
Figure 2 is a schematic diagram illustrating an exemplary structure when the eccentric wheel in the rotating mechanism of the present invention does not rotate;
Figure 3 is a schematic diagram illustrating an exemplary structure when the eccentric wheel in the rotating mechanism of the present invention rotates counterclockwise by 90 degrees;
Figure 4 is a schematic diagram illustrating an exemplary structure when the eccentric wheel in the rotating mechanism of the present invention rotates counterclockwise by 180 degrees;
Figure 5 is a schematic diagram illustrating an exemplary structure when the eccentric wheel in the rotating mechanism of the present invention rotates counterclockwise by 270 degrees;
Figure 6 is a schematic diagram illustrating an exemplary structure of the electric toothbrush of the present invention;
Figure 7 is a schematic diagram illustrating a sectional view of the electric toothbrush of the present invention; and
Figure 8 is a schematic diagram illustrating an explosive view of the electric toothbrush of the present invention.

In Figures: 10-Motor Holder, 100-Connecting Shaft, 11-Swing Rod, 12-Connecting Rod Assembly, 121-First Connecting Rod, 122-Second Connecting Rod, 13-Intermediate Support, 14-Top Support, 15-Sealing Sleeve, 16-Motor, 17-Eccentric Wheel, 170-Wheel Axle, 18-Drive Shaft, 181-First Positioning Column, 182-Second Positioning Column, 19-Control Board, 20-Housing, 21-Rubber Sleeve, 22-Button.

### DETAILED DESCRIPTION

To allow those skilled in the art to better understand the technical solutions of the embodiments of the present invention, the present invention is described in detail below with reference to the drawings and specific embodiments.

The present invention provides a rotating mechanism used on an electric toothbrush. The electric toothbrush comprises a motor 16, a drive shaft 18, and an eccentric wheel 17 arranged on an output shaft of the motor 16. The drive shaft 18 is used to connect a brush head.

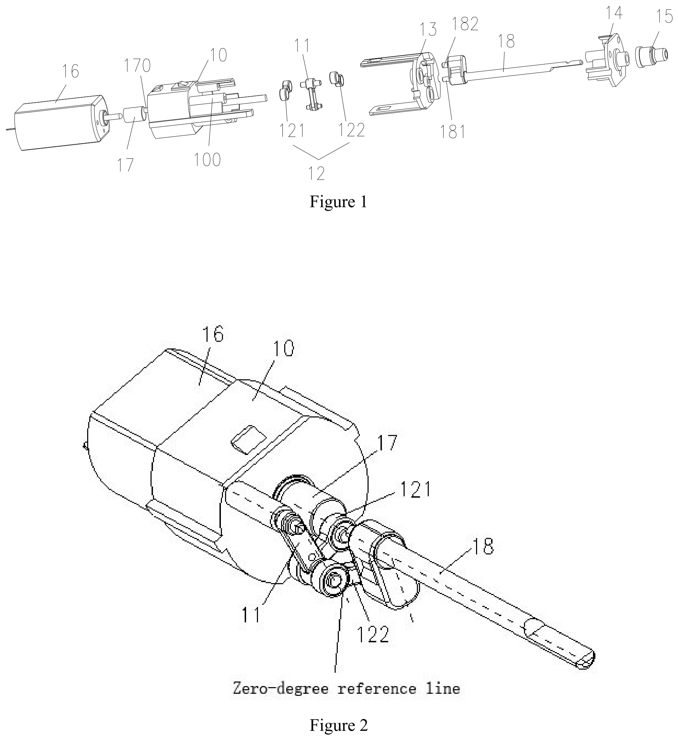

As shown in Figure 1, the rotating mechanism of the present invention comprises a motor holder 10, a swing rod 11 and a connecting rod assembly 12. The motor holder 10 is used for mounting the motor 16, and a first end of the swing rod 11 is rotatably connected to the motor holder 10. The connecting rod assembly 12 comprises a first connecting rod 121 and a second connecting rod 122. The first connecting rod 121 is respectively rotatably connected to a wheel axle 170 of the eccentric wheel 17 and a second end of the swing rod 11. The second connecting rod 122 is respectively rotatably connected to the drive shaft 18 and a second end of the eccentric wheel 17.

As shown in Figures 2 to 5, when the eccentric wheel 17 rotates, the swing rod 11 is driven by the first connecting rod 121 to swing relative to the motor holder 10 within a preset angle range, and when the swing rod 11 swings, the drive shaft 18 is driven by the second connecting rod 122 to swing synchronously with the swing rod 11. Namely, a 360-degree rotary motion of the eccentric wheel 17 is converted into a synchronous swing motion of the swing rod 11 and the drive shaft 18. Because the drive shaft 18 is connected to the brush head, the brush head is driven to swing by means of the swinging of the drive shaft 18 such that the tooth brushing is achieved.

Preferably, in this embodiment, the preset angle range is -20°~20°.

Specifically, the present invention is further described by taking the eccentric wheel 17 rotating in a counterclockwise direction and the swing rod 11 being exactly located on a zero-degree reference line at an initial position as an example:
As shown in Figure 2, when the eccentric wheel 17 does not rotate, the swing rod 11 is just located on the zero-degree reference line.

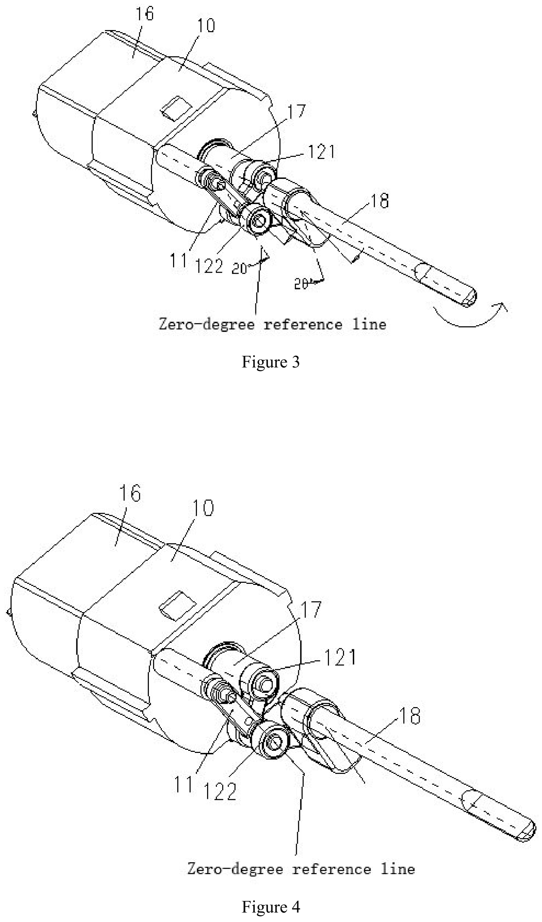

As shown in Figure 3, when the eccentric wheel 17 rotates by 90 degrees in a counterclockwise direction, the swing rod 11 is driven by the first connecting rod 121 to rotate by 20 degrees in a counterclockwise direction.

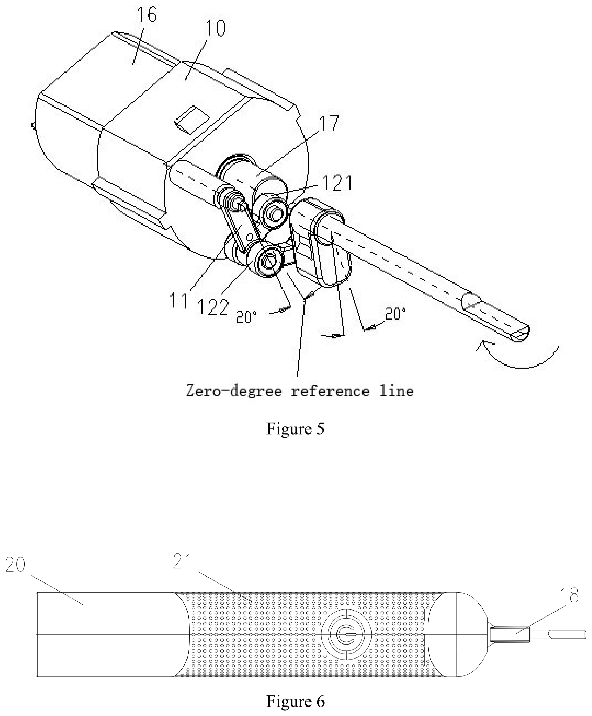

As shown in Figure 4, when the eccentric wheel 17 continues to rotate counterclockwise to 180 degrees, the swing rod 11 is driven by the first connecting rod 121 to rotate clockwise by 20 degrees, and at this point, the swing rod 11 rotates to return to the zero-degree reference line. As shown in Figure 5, when the eccentric wheel 17 continues to rotate counterclockwise to 270 degrees, the swing rod 11 is driven by the first connecting rod 121 to continue to rotate clockwise by 20 degrees. As shown in Figure 6, when the eccentric wheel 17 rotates to 360 degrees, the swing rod 11 is driven by the first connecting rod 121 to rotate counterclockwise again by 20 degrees to return to the zero-degree reference line. Thus, every time the eccentric wheel 17 completes one full rotation, the swing rod 11 and the drive shaft 18 swing back and forth once.

Compared with using a gear mechanism and a runway-type connecting rod mechanism, the rotating mechanism in this embodiment connects the wheel axle 170 of the eccentric wheel 17 and the drive shaft 18 by means of two connecting rods and a swing rod 11. This design enables the drive shaft 18 to swing more stably and smoothly, reduces power consumption and noise, and thereby prolongs the functional life of the electric toothbrush using this rotating mechanism. As shown in Figure 1, in some embodiments, the rotating mechanism further comprises an intermediate support 13 connected to the motor holder 10. The intermediate support 13 is used for mounting the drive shaft 18. One end of the drive shaft 18 connected to the second connecting rod 122 is provided with a first positioning column 181 and a second positioning column 182.

The intermediate support 13 is provided with a positioning hole coaxial with the output shaft of the motor 16. The drive shaft 18 is located on one side of the intermediate support 13 away from the motor holder 10. The first positioning column 181 of the drive shaft 18 is rotatably connected to the positioning hole in the intermediate support 13, and the second connecting rod 122 is rotatably connected to the second positioning column 182 of the drive shaft 18. When the swing rod 11 rotates, the drive shaft 18 is driven by the second connecting rod 122 to swing around the axis of the first positioning column 181 of the drive shaft 18. The intermediate support 13 may be provided with an avoidance space for allowing the second positioning column 182 to rotate.

As shown in Figure 1, in some embodiments, the first connecting rod 121, the swing rod 11, and the second connecting rod 122 are all located between the intermediate support 13 and the motor holder 10 and are arranged in sequence along the axis direction of the output shaft of the motor. The first connecting rod 121 and the second connecting rod 122 are located on opposite sides of the swing rod 11. The first connecting rod 121 and the second connecting rod 122 respectively abut against the swing rod 11, thereby making the structure of the rotating mechanism more compact.

Further, in this embodiment, the two ends of the swing rod 11 are respectively provided with a rotating shaft, and the two ends of the two connecting rods are respectively provided with an axle hole. The two axle holes in the first connecting rod 121 are respectively correspondingly sleeved on the wheel axle 170 of the eccentric wheel 17 and the rotating shaft of the swing rod 11. The two axle holes in the second connecting rod 122 are respectively correspondingly sleeved on the rotating shaft of the swing rod 11 and the second positioning column 182 on the rotating shaft. This facilitates the connection between the swing rod 11 and the two connecting rods.

As shown in Figure 1, in this embodiment, the motor holder 10 is provided with a connecting shaft 100 that is parallel to the axis of the output shaft of the motor 16. The connecting shaft 100 is arranged away from the output shaft of the motor 16. An end portion of the connecting shaft 100 is provided with a locating hole. The rotating shaft of the first end of the swing rod 11 extends into the locating hole and is connected to the locating hole. When the eccentric wheel 17 rotates, the swing rod 11 is driven by the first connecting rod 121 to swing around the axis of the connecting shaft 100. This structure facilitates the assembly of the swing rod 11.

As shown in Figure 1, in some embodiments, the rotating mechanism further comprises a top support 14 and a sealing sleeve 15 that are respectively sleeved on the drive shaft 18. The top support 14 is located on one side of the intermediate support 13 opposite to the motor holder 10 and is connected to the intermediate support 13. The top support 14 is used to stabilize the drive shaft 18.

In this embodiment, the top support 14 and the sealing sleeve 15 are respectively sleeved on the drive shaft 18. The top support 14 is in a clearance fit with the drive shaft 18 to avoid affecting the rotation of the drive shaft 18. The sealing sleeve 15 is in an interference fit with the drive shaft 18 to prevent water from flowing into the interior of the electric toothbrush. Preferably, the sealing sleeve 15 is made of silica gel.

In this embodiment, to ensure the strength and waterproof performance of the drive shaft 18, the drive shaft 18 is made of stainless steel. Meanwhile, the outer periphery of the drive shaft 18 is provided with a rubber coating for protecting the drive shaft 18.

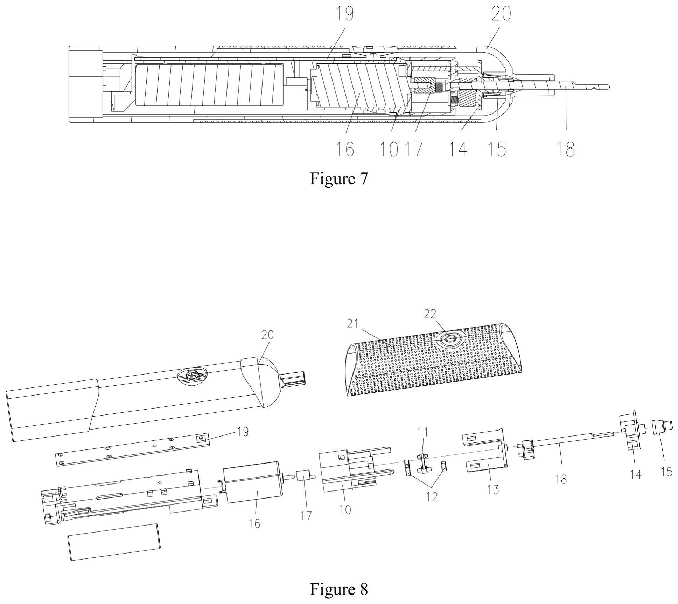

As shown in Figures 6-8, the present invention also provides an electric toothbrush, comprising at least a control board 19, a housing 20, a rubber sleeve 21 and the rotating mechanism in above any embodiments.

The housing 20 respectively encloses the control board 19 and the rotating mechanism. The drive shaft 18 on the rotating mechanism extends outwards, and a free end of the drive shaft 18 is used for connecting the brush head. The control board 19 is connected to the motor 16, and the control board 19 is provided with a switch for controlling the start-up and stop of the motor 16.

The rubber sleeve 21 is sleeved on the housing 20, the rubber sleeve 21 is provided with a button 22, and the button 22 corresponds to the switch on the control board 19. The switch is controlled through the button 22.

The above embodiments are merely exemplary embodiments of the present invention and are not intended to limit the present invention. The scope of the present invention is defined by the claims. Those skilled in the art may make various modifications or equivalent replacements to the present invention within the essence and scope of the present invention, and these modifications or equivalent replacements should also be regarded as falling within the scope of the present invention.

## Claims

1. A rotating mechanism used on an electric toothbrush, wherein the electric toothbrush comprises: a motor (16), a drive shaft (18), and an eccentric wheel (17) arranged on an output shaft of the motor (16), wherein the drive shaft (18) is used for connecting a brush head, wherein the rotating mechanism comprises: a motor holder (10), a swing rod (11), and a connecting rod assembly (12), wherein the motor holder (10) is used for mounting the motor (16), wherein a first end of the swing rod (11) is rotatably connected to the motor holder (10), wherein the connecting rod assembly (12) comprises a first connecting rod (121) and a second connecting rod (122), wherein the first connecting rod (121) is respectively rotatably connected to a wheel axle (170) of the eccentric wheel (17) and a second end of the swing rod (11), wherein the second connecting rod (122) is respectively rotatably connected to the drive shaft (18) and a second end of the eccentric wheel (17), wherein when the eccentric wheel (17) rotates, the swing rod (11) is driven by the first connecting rod (121) to swing relative to the motor holder (10) within a preset angle range, and wherein when the swing rod (11) swings, the drive shaft (18) is driven by the second connecting rod (122) to swing synchronously with the swing rod (11).

2. The rotating mechanism of claim 1, wherein the rotating mechanism further comprises an intermediate support (13) connected to the motor holder (10), wherein the drive shaft (18) is provided with a first positioning column (181) and a second positioning column (182), wherein the first positioning column (181) is rotatably connected to the intermediate support (13), and wherein the second positioning column (182) is rotatably connected to the second connecting rod (122).

3. The rotating mechanism of claim 2, wherein the first connecting rod (121), the swing rod (11), and the second connecting rod (122) are all located between the intermediate support (13) and the motor holder (10) and are arranged in sequence along the axis direction of the output shaft of the motor (16).

4. The rotating mechanism of claim 2, wherein two ends of the swing rod (11) are respectively provided with a rotating shaft, wherein two ends of the two connecting rods are respectively provided with an axle hole, wherein the two axle holes in the first connecting rod (121) are respectively correspondingly sleeved on the wheel axle (170) of the eccentric wheel (17) and the drive shaft (18), and wherein the two axle holes in the second connecting rod (122) are respectively correspondingly sleeved on the rotating shafts of the swing rod (11).

5. The rotating mechanism of claim 4, wherein the motor holder (10) is provided with a connecting shaft (100) that is parallel to the axis of the output shaft of the motor (16), wherein the connecting shaft (100) is arranged away from the output shaft of the motor (16), wherein an end portion of the connecting shaft (100) is provided with a locating hole, and wherein the rotating shaft of the first end of the swing rod (11) extends into the locating hole and is in a clearance fit with the locating hole.

6. The rotating mechanism of claim 2, wherein the rotating mechanism further comprises a top support (14) and a sealing sleeve (15) that are respectively sleeved on the drive shaft (18), wherein the top support (14) is connected to the intermediate support (13), wherein the sealing sleeve (15) is fixed on the top support (14), wherein the top support (14) is in clearance fit with the drive shaft (18), and wherein the sealing sleeve (15) is in an interference fit with the drive shaft (18).

7. The rotating mechanism of claim 6, wherein the outer periphery of the drive shaft (18) is provided with a rubber coating.

8. The rotating mechanism of claim 7, wherein the drive shaft (18) is made of stainless steel and the sealing sleeve (15) is made of silica gel.

9. The rotating mechanism of claim 1, wherein the preset angle range is -20°~20°.

10. An electric toothbrush, comprising the rotating mechanism of claims 1-9.
